(19) **Europäisches Patentamt / European Patent Office / Office européen des brevets**

(11) **EP 4 015 480 B1**

(12) **EUROPÄISCHE PATENTSCHRIFT**

(45) Veröffentlichungstag und Bekanntmachung des Hinweises auf die Patenterteilung:
**06.05.2026   Patentblatt 2026/19**

(21) Anmeldenummer: **21212465.5**

(22) Anmeldetag: **06.12.2021**

(51) Internationale Patentklassifikation (IPC):
**C04B 12/00** *(2006.01)*      **C04B 28/00** *(2006.01)*
C04B 111/28 *(2006.01)*      C04B 111/40 *(2006.01)*

(52) Gemeinsame Patentklassifikation (CPC):
(C-Sets verfügbar)
**C04B 12/005; C04B 28/006; C04B 28/008;**
C04B 2103/0022; C04B 2111/28; C04B 2111/40;
C04B 2201/32; Y02P 40/10; Y02W 30/91      (Forts.)

(54) **RESTSTOFFBASIERTE ZUSAMMENSETZUNG ZUR HERSTELLUNG EINES GEOPOLYMER-LEICHTSTEINS; GEOPOLYMER-LEICHTSTEIN, SOWIE EIN VERFAHREN ZU DESSEN HERSTELLUNG UND DEREN VERWENDUNG**

RESIDUAL MATERIAL-BASED COMPOSITION FOR THE PREPARATION OF A GEOPOLYMER LIGHT STONE; GEOPOLYMER LIGHT STONE, METHOD FOR ITS PREPARATION AND ITS USE

COMPOSITION À BASE DE RÉSIDUS DESTINÉE À LA PRODUCTION D'UNE PIERRE LÉGÈRE GÉOPOLYMÈRE, PIERRE LÉGÈRE GÉOPOLYMÈRE, AINSI QUE SON PROCÉDÉ DE FABRICATION ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2020   DE 102020134133**

(43) Veröffentlichungstag der Anmeldung:
**22.06.2022   Patentblatt 2022/25**

(73) Patentinhaber: **Technische Universität Bergakademie Freiberg
09599 Freiberg (DE)**

(72) Erfinder:
- **Kraft, Michael
  09599 Freiberg (DE)**
- **Fröhlich, Peter
  09599 Freiberg (DE)**
- **Bertau, Martin
  09599 Freiberg (DE)**
- **Dombrowski-Daube, Katja
  09599 Freiberg (DE)**
- **Sachl, Jan
  09599 Freiberg (DE)**
- **Huber, Ralf
  01683 Nossen (DE)**
- **Lange, Heike
  09599 Freiberg (DE)**

(74) Vertreter: **Kailuweit & Uhlemann Patentanwälte Partnerschaft mbB
Bamberger Straße 49
01187 Dresden (DE)**

(56) Entgegenhaltungen:
EP-A1- 2 970 003      EP-B1- 2 970 003
WO-A1-2008/017109      WO-A1-2019/072993
CN-A- 111 377 665      DE-A1- 10 341 171
DE-A1- 102013 001 927      DE-A1- 102014 003 104
DE-A1- 102017 120 798      DE-B4- 10 300 043
KR-A- 20200 001 255

- MEDRI V: "effect of metallic si addition on polymerization degree of in situ foamed alkali-aluminosilicates", CERAM INT, vol. 39, 1 January 2013 (2013-01-01), pages 7657 - 7668, XP028676323
- ROVIELLO GIUSEPPINA ET AL: "Lightweight geopolymer-based hybrid materials", COMPOSITES PART B, ELSEVIER, AMSTERDAM, NL, vol. 128, 14 July 2017 (2017-07-14), pages 225 - 237, XP085179363, ISSN: 1359-8368, DOI: 10.1016/ J.COMPOSITESB.2017.07.020

- VAN RIESSEN A.: "bayer geopolymers: an exploration of synergy between the alumina and geopolymer industries", CEM. CONCR. COMPOS., vol. 41, 1 January 2013 (2013-01-01), pages 29 - 33, XP093276648
- MAGAR AMBAR B R ET AL: "A Laboratory Scale Synthesis of Geopolymer from Brick-dust Waste", THE JOURNAL OF UNIVERSITY GRANTS COMMISSION, 31 December 2012 (2012-12-31), XP055843942
- ZAWRAH M F ET AL: "Recycling and utilization assessment of waste fired clay bricks (Grog) with granulated blast-furnace slag for geopolymer production", PROCESS SAFETY AND ENVIRONMENTAL PROTECTION, INSTITUTION OF CHEMICAL ENGINEERS, RUGBY, GB, vol. 103, 6 August 2016 (2016-08-06), pages 237 - 251, XP029738934, ISSN: 0957-5820, DOI: 10.1016/J.PSEP.2016.08.001
- HAJIMOHAMMADI A ET AL: "One-Part Geopolymer Mixes from Geothermal Silica and Sodium Aluminate", INDUSTRIAL & ENGINEERING CHEMISTRY RESEARCH, AMERICAN CHEMICAL SOCIETY, vol. 47, no. 23, 3 December 2008 (2008-12-03), pages 9396 - 9405, XP002617569, ISSN: 0888-5885, [retrieved on 20081028], DOI: 10.1021/IE8006825
- PAOLA PALMERO ET AL: "Processing and applications of geopolymers as sustainable alternative to traditional cement", RECENT ADVANCES IN ENERGY, ENVIRONMENT AND FINANCIAL PLANNING; PROCEEDINGS OF THE 5TH INTERNATIONAL CONFERENCE ON DEVELOPMENT, ENERGY, ENVIRONMENT, ECONOMICS (DEEE '14); 22-24 NOVEMBER 2014; FLORENCE/ ITALY, 31 December 2015 (2015-12-31), pages 213 - 221, XP055273154, ISBN: 978-960-474-400-8

(52) Gemeinsame Patentklassifikation (CPC): (Forts.)

C-Sets
C04B 28/006, C04B 18/025, C04B 18/0409, C04B 38/02;
C04B 28/006, C04B 18/025, C04B 22/0093, C04B 38/02;
C04B 28/006, C04B 18/0409, C04B 18/06, C04B 18/08, C04B 18/146, C04B 18/16, C04B 22/0093, C04B 40/0263;
C04B 28/006, C04B 18/0409, C04B 18/06, C04B 18/08, C04B 18/16, C04B 22/0093, C04B 38/08, C04B 40/0263;
C04B 28/008, C04B 18/025, C04B 18/0409, C04B 38/02;
C04B 28/008, C04B 18/025, C04B 22/0093, C04B 38/02

**Beschreibung**

Die Erfindung betrifft eine reststoffbasierte Zusammensetzung zur Herstellung eines Geopolymer-Leichtsteins, einen Geopolymer-Leichtstein, sowie ein Verfahren zu dessen Herstellung und dessen Verwendung.

Die Verwertung von Reststoffen unterschiedlichster Industriezweige zur Herstellung von neuen Produkten spielt im Interesse einer nachhaltigen Nutzung von Ressourcen und Rohstoffen eine große Rolle. Im Bereich des Bauwesens stellen Geopolymere eine ressourcenschonende Alternative dar, z.B. als Zementersatz oder zur Herstellung von Ziegeln als Baumaterial. Geopolymere sind anorganische calciumfreie Polymere auf Basis von Silicium- und Aluminiumoxid. **Davidovits et al** beschreiben die Herstellung von Geopolymeren als chemische Reaktion, insbesondere Polykondensation, von Alumo-Silikat-Oxiden mit alkalischen Polysilikaten, welche in polymeren Si-O-Al Bindungen resultiert. Sie entstehen bei der Reaktion eines hochalkalischen Aktivators und einer reaktiven Komponente auf Basis von Silicium- und Aluminiumoxid. Ein Beispiel für eine reaktive Komponente auf Basis von Silicium- und Aluminiumoxid ist Metakaolin, welches aus natürlich vorkommenden, kaolinitischem Ton hergestellt wird. Die hochalkalischen Aktivatoren enthalten Alkalisilikate, wie bspw. Alkaliwassergläser und deren Lösungen.

Geopolymere sind schnell erhärtend, binden schrumpffrei ab und weisen hohe Druckfestigkeiten auf. Des Weiteren sind sie aufgrund ihrer Struktur und Zusammensetzung nicht brennbar, temperaturbeständig, formstabil und zeigen gegenüber allen anorganischen und organischen Säuren (außer Flusssäure) eine erhöhte Beständigkeit.

Geopolymere aus Reststoffen herzustellen ist bspw. aus **Zawrah et al** bekannt. Hier werden aus Ziegelmehl, einem Abfallprodukt der Ziegelherstellung, Hüttensand und einer alkalischen Aktivatorlösung aus NaOH und $Na_2SiO_3$ Geopolymer-Formkörper für den Einsatz als Baumaterial hergestellt. **Tuyan et al** untersuchen die Auswirkungen der Aktivatorkonzentration auf das Aushärteverhalten von Geopolymermischungen aus Ziegelmehl, Natriumsilikat, Natriumhydroxid und Sand.

WO 2020/120405 A1 offenbart eine Geopolymer-Schaumzusammensetzung aus einem chemisch und einem mechanisch geschäumten Aluminiumsilikat-Geopolymer.

In DE 100 41 834 A1 wird ein Verfahren zur Herstellung von Porenbetonbauelementen offenbart, bei dem ein Treibmittel wie Aluminiumpulver der Schlämme zugegeben wird.

In EP 2 462 075 B1 wird eine Zusammensetzung zur Herstellung eines Feuerleichtsteins enthaltend wenigstens ein Aluminiumsilikat und/oder ein Calcium-Aluminiumsilikat und ein anorganisches Bindemittel, wie Gips, Calciumsulfat-Halbhydrat, Anhydrit, offenbart. EP 1 686 105 B1 offenbart ein Verfahren zum Herstellen feuerfester Leichtsteine aus Schleif- oder Mahlstaub von Feuerleichtsteinen, einem Bindemittel, wie Wasserglas oder Aluminiumphosphat, und Zusatzstoffen.

WO 2008/017109 A1 offenbart ein Verfahren zur Bildung eines Geopolymers. Dabei wird einer alkalischen Prozessflüssigkeit aus unterschiedlichen Verfahrensstufen des Bayer-Prozesses, eine $SiO_2$- und eine $Al_2O_3$-Quelle, wie u.a. Flugasche zugegeben. Weiterhin kann eine ätzende Lösung, wie eine konzentrierte wässrige Lösung eines Alkalimetals oder Erdalkalihydroxids, zugegeben werden.

DE 10 2017 120 789 A1 offenbart einen Mörtel für Kanalsanierungen, umfassend ein Geopolymer, umfassend Silica (bspw. Microsilica als Reststoff der chemischen Industrie) und Natriumaluminat (bspw. aus Abfallströmen der Aluminium-Anodisierung), und ein Additiv, umfassend CaO (bspw. gemahlener Hüttensand, Stein-/Braunkohleflugasche oder Zement).

WO 2019/072993 A1 offenbart ein Verfahren zur Herstellung eines dichten Geopolymers aus einem Precursor, umfassend eine Gibbsit-reiche Quelle, wobei der Precursor alkalisch aktiviert - bspw. mittels reststoffbasierter alkalischer Lösungen - gemischt und geformt und hydrothermal ausgehärtet wird.

KR 2020 0001255 A beschreibt ein Verfahren zur Herstellung eines leichten Geopolymerblocks. Dabei wird ein Geopolymerrohmaterial aus dem Reststoff Schlacke und einem reststoffbasierten Porosierungsmittel mit einer komplexen Aktivatorlösung gemischt.

DE 10 2014 003 104 A1 beschreibt eine Zusammensetzung zur Herstellung von Schaum- und Blähmassen aus einem alumosilikatischen Bindemittel, wie bspw. Flugasche oder Ziegelmehl, einem alkalischen Aktivator, wie bspw. Kaliumhydroxid oder Natronlauge. Der Zusammensetzung können Additive, bspw. Porosierungsmittel, wie Ausbrennstoffe oder mit Wasser exotherm reagierende Stoffe, wie bspw. Styropor, Brandkalk zugegeben werden.

Aus dem Stand der Technik sind derzeit keine vollständig reststoffbasierten Zusammensetzungen zur Herstellung von Geopolymer-Leichtsteinen bekannt.

Aufgabe der Erfindung ist es daher, eine vollständig reststoffbasierte Zusammensetzung zur Herstellung von Geopolymer-Leichtsteinen, als auch einen Geopolymer-Leichtstein und ein Verfahren zu dessen Herstellung anzugeben.

Die Aufgabe wird gelöst durch eine reststoffbasierte Zusammensetzung, einen Geopolymer-Leichtstein und ein Verfahren zur Herstellung eines Geopolymer-Leichtsteins mit den Merkmalen gemäß den unabhängigen Ansprüchen. Vorteilhafte Ausgestaltungen geben jeweils die abhängigen Ansprüche wieder.

Erfindungsgemäß enthält eine reststoffbasierte Zusammensetzung zur Herstellung eines Geopolymer-Leichtsteins mindestens ein reststoffbasiertes, alumosilikatisches Bindemittel, mindestens einen reststoffbasierten, alkalischen Aktivator und mindestens ein reststoffbasiertes Porosierungsmittel. In der reststoffbasierten Zusammensetzung liegt das Verhältnis des mindestens einen reststoffbasierten, alkalischen Aktivators zum mindestens einen reststoffbasierten, alumosilikatischen Bindemittel im Bereich von 0,2 bis 1,0. Erfindungsgemäß ist das mindestens eine reststoffbasierte, alumosilikatische Bindemittel Ziegelmehl, und der mindestens eine reststoffbasierte, alkalische Aktivator eine wässrige, alkalische, Aluminium-enthaltende Lösung.

Vorteilhaft ist eine derartige Zusammensetzung vollständig reststoffbasiert, so das natürliche Ressourcen geschont und Deponiemengen und -raum eingespart werden. Weiterhin vorteilhaft sind aus einem derartigen Gemisch hergestellte Geopolymer-Leichtsteine nach deren Nutzungsdauer vollständig recycelbar. Ebenfalls vorteilhaft lässt sich ein derartiges Gemisch zur Herstellung von Geopolymer-Leichtsteinen in einem Niedertemperaturprozess verarbeiten, so dass der Energiebedarf zur Herstellung der Leichtsteine signifikant gesenkt werden kann. Ebenfalls vorteilhaft werden eventuell in den reststoffbasierten Ausgangsstoffen enthaltende Schadstoffe immobilisiert.

Ein reststoffbasiertes, alumosilikatisches Bindemittel im Sinne der Erfindung meint ein in Pulverform vorliegendes Bindemittel auf Basis von $SiO_2$ und $Al_2O_3$ und weiteren Alkali-, Erdalkali- und/oder Metalloxiden, welches als Rest- und/oder Abfallprodukt aus unterschiedlichen industriellen Prozessen hervorgeht.

In weiteren Ausführungsformen ist das mindestens eine reststoffbasierte, alumosilikatische Bindemittel eine Mischung aus unterschiedlichen, reststoffbasierten, alumosilikatischen Bindemitteln.

In Ausführungsformen ist das mindestens eine reststoffbasierte, alumosilikatische Bindemittel Ziegelmehl, Braunkohleflugasche, Steinkohleflugasche, Rotschlamm, Klärschlammaschen oder eine Mischung der Vorgenannten.

Ziegelmehl meint dabei ein pulverförmiges Recycling- oder Abfallprodukt der Ziegelherstellung.

Braunkohlflugasche meint einen festen, pulverförmigen Rückstand der Verbrennung von Braunkohle. Steinkohleflugasche meint einen festen, pulverförmigen Rückstand der Verbrennung von Steinkohle.

Rotschlamm, auch bezeichnet als Bauxitrückstand, meint ein pulverförmiges Abfallprodukt, welches bei der Gewinnung von Aluminiumoxid aus aluminiumhaltigen Erzen anfällt und hauptsächlich Eisen-, Aluminium- und Titanoxide und verschiedene Kieselsäureverbindungen enthält.

Klärschlammasche meint einen festen und pulverförmigen Rückstand aus der Verbrennung von Klärschlamm, einem Abfallprodukt der Abwasserbehandlung in Kläranlagen.

In Ausführungsformen weist das mindestens eine reststoffbasierte, alumosilikatische Bindemittel Korngrößen zwischen 0 $\mu m$ und 250 $\mu m$, bevorzugt zwischen 0 $\mu m$ und 125 $\mu m$, insbesondere bevorzugt zwischen 0 $\mu m$ und 63 $\mu m$ auf. Im Rahmen der Beschreibung der Erfindung meint die Angabe "Korngrößen zwischen 0 $\mu m$ und 63 $\mu m$" eine Korngrößenverteilung, ermittelt bspw. durch fraktionierte Siebung mit Sieben üblicher genormter Maschenweite bis hin zur Maschenweite "63 $\mu m$" nach DIN EN 933-1 und/oder durch Lasergranulometrie nach ISO 13320:2020-01. Vorteilhaft steigt die Reaktivität des reststoffbasierten, alumosilikatischen Bindemittels mit abnehmender Korngröße.

In Ausführungsformen weist das mindestens eine reststoffbasierte, alumosilikatische Bindemittel ein molares Verhältnis von Si:Al im Bereich von 0,5:1 bis 6:1 auf. In weiteren Ausführungsformen weist das mindestens eine reststoffbasierte, alumosilikatische Bindemittel einen Ca-Gehalt kleiner 15 Gew.-%, bevorzugt kleiner 10 Gew.-% auf.

Ein reststoffbasierter, alkalischer Aktivator ist erfindungsgemäß eine wässrige, alkalische, Aluminium-enthaltende Lösung, welche als Rest- und/oder Abfallstoff aus unterschiedlichen industriellen Prozessen hervorgeht. Vorteilhaft ermöglicht ein derartiger reststoffbasierter, alkalischer Aktivator die Bildung von Geopolymeren mit einem erhöhten Aluminium-Gehalt. Weiterhin vorteilhaft ist in einem derartigen reststoffbasierten, alkalischen Aktivator Aluminium bereits gelöst und steht damit direkt der Geopolymerbildung zur Verfügung, so dass ein erhöhter Geopolymerisationsgrad erreicht wird, der die mechanischen Eigenschaften, wie die Festigkeit, des gebildeten Geopolymers positiv beeinflusst.

In Ausführungsformen ist der reststoffbasierte, alkalische Aktivator eine wässrige, alkalische, Aluminium enthaltende Lösung, hergestellt durch Lösen von Natriumaluminat in Wasser unter Zusatz von Natronlauge.

In weiteren Ausführungsformen ist der reststoffbasierte, alkalische Aktivator ein pulverförmiger, reststoffbasierter, alkalischer Aktivator, bevorzugt Natriumaluminat, welcher als Reststoff aus unterschiedlichen industriellen Prozessen hervorgeht. Vorteilhaft enthält die reststoffbasierte Zusammensetzung zur Herstellung eines Geopolymer-Leichtsteins dann Wasser, um die Lösung des pulverförmigen, reststoffbasierten, alkalischen Aktivators zu ermöglichen.

Der Geopolymerisationsgrad ist von verschiedenen Faktoren abhängig, bspw. von der Reaktivität des mindestens einen reststoffbasierten Bindemittels, von der Alkalität des mindestens einen reststoffbasierten, alkalischen Aktivators sowie den Parametern, wie Temperatur und Dauer, einer zur Geopolymerbildung nötigen thermischen Aktivierung.

In Ausführungsformen weist der mindestens eine reststoffbasierte, alkalische Aktivator einen Aluminium-Gehalt von 4 Gew.-% bis 5 Gew.-% auf. Vorteilhaft wird dadurch gelöstes Aluminium für die Geopolymerbildung bereitgestellt.

In weiteren Ausführungsformen weist der mindestens eine reststoffbasierte, alkalische Aktivator einen pH-Wert von 11 bis 14, bevorzugt von 12 bis 13 auf. Vorteilhaft wird ein ausreichendes Lösen des mindestens einen reststoffbasierten, alumosiliaktischen Bindemittels für die Geopolymerbildung erreicht.

Ein reststoffbasiertes Porosierungsmittel im Sinne der Erfindung meint ein in Pulverform vorliegendes und mit den weiteren Bestandteilen der reststoffbasierten Zusammensetzung unter Gasbildung reagierendes Porosierungsmittel, welches als Rest- und/oder Abfallstoff aus unterschiedlichen industriellen Prozessen hervorgeht.

In Ausführungsformen ist das mindestens eine reststoffbasierte Porosierungsmittel eine Mischung unterschiedlicher reststoffbasierter Porosierungsmittel.

Ein Geopolymer-Leichtstein im Sinne der Erfindung meint einen Formkörper mit einer Dichte < 800 kg/m$^3$, dessen festigkeitsgebende Struktur auf einem Geopolymernetzwerk basiert. Ein Geopolymernetzwerk ist ein alumosilikatisches Netzwerk aus $SiO_4$-und $AlO_4$-Tetraedern, verbunden über gemeinsame Sauerstoff-Atome mit einem molaren Verhältnis von Na:Al im Bereich von 0,4 bis 1,0, bevorzugt 0,5 bis 0,7.

In Ausführungsformen weist die reststoffbasierte Zusammensetzung weitere, nicht an der Geopolymerbildung beteiligte Komponenten auf. Weitere, nicht an der Geopolymerbildung beteiligte Komponenten sind bspw. Calciumhydroxid, Hüttensand oder Zement. Vorteilhaft kommt es neben der Geopolymerisation zur Ausbildung von Calciumsilikathydrat- (CSH-) und/oder Calciumaluminatsilikathydratphasen (CASH-Phasen), die zu einer schnelleren Verfestigung führen.

In bevorzugten Ausführungsformen liegt das Verhältnis des mindestens einen reststoffbasierten, alkalischen Aktivators zum mindestens einen reststoffbasierten, alumosilikatischen Bindemittel in der reststoffbasierten Zusammensetzung im Bereich von 0,35 bis 0,55.

Vorteilhaft weist eine derartige Zusammensetzung eine optimale Konsistenz für die weitere Verarbeitung auf. Weiterhin vorteilhaft wird dadurch ein homogenes Aufschäumen und die Ausbildung einer gleichmäßigen Porenverteilung während einer zur Geopolymerbildung nötigen thermischen Aktivierung erreicht.

In bevorzugten Ausführungsformen ist das mindestens eine reststoffbasierte Porosierungsmittel ein siliziumbasiertes Pulver, wobei das siliziumbasierte Pulver ein Abfallprodukt der Silizium-produzierenden und/oder -verarbeitenden Industrie ist.

Vorteilhaft reagiert ein derartiges Porosierungsmittel erst während einer zur Geopolymerbildung nötigen thermischen Aktivierung. Weiterhin vorteilhaft reagiert ein derartiges Porosierungsmittel in alkalischer Umgebung nicht exotherm. Vorteilhaft werden dadurch Ressourcen geschont und Reststoffe verwertet.

Siliziumbasiert meint dabei, dass das Porosierungsmittel überwiegend aus Silizium besteht. In Ausführungsformen weist ein siliziumbasiertes Pulver mindestens 85 Gew.-% Silizium auf.

Abfallprodukte der Silizium-produzierenden und/oder verarbeitenden Industrie meint jegliche trockene, in Pulverform vorliegende Si-Reststoffe, wie bspw. gemahlene Schnittreste von Silizium-Wafern, gemahlene Silizium-Solarzellen aus dem Recycling von Alt-Solarmodulen, aufbereitete und getrocknete Silizium-Wafer-Sägeabfälle.

In Ausführungsformen ist das mindestens eine reststoffbasierte Porosierungsmittel eine Mischung unterschiedlicher siliziumbasierter Pulver.

In Ausführungsformen weist das siliziumbasierte Pulver eine Korngröße von < 63 $\mu$m, bevorzugt < 45 $\mu$m auf. Vorteilhaft weisen derartige siliziumbasierte Pulver eine erhöhte Reaktivität auf und ermöglichen eine gleichmäßige Porenbildung und die Ausbildung einer homogenen Porenverteilung während einer zur Geopolymerbildung nötigen thermischen Aktivierung.

In bevorzugten Ausführungsformen ist der mindestens eine reststoffbasierte, alkalische Aktivator Natriumaluminatlauge.

Natriumaluminatlauge als industrielles Abfallprodukt fällt u.a. bei jeglichen industriellen Prozessen zur Reinigung und/oder Oberflächenbearbeitung von Aluminiumwerkstücken mit Natronlauge an, bspw. beim Beizen von Aluminiumteilen im Flugzeug- oder Fahrzeugbau.

In Ausführungsformen weist die Natriumaluminatlauge eine Konzentration von 3 bis 12 mol/l, bevorzugt von 5 bis 10 mol/l, besonders bevorzugt von 6 bis 7 mol/l auf. Vorteilhaft wird dadurch ein ausreichendes Lösen des reststoffbasierten, alumosilikatischen Bindemittels für die Geopolymerbildung erreicht.

In Ausführungsformen ist die Natriumaluminatlauge hergestellt durch Lösen eines pulverförmigen, reststoffbasierten, alkalischen Aktivators, bevorzugt Natriumaluminat, in Wasser unter Zusatz von Natronlauge.

Erfindungsgemäß ist das mindestens eine reststoffbasierte, alumosilikatische Bindemittel Ziegelmehl.

Vorteilhaft schont ein derartiges Bindemittel die Ressourcen und spart Deponiemengen und - raum ein. Ebenfalls vorteilhaft ist gegenüber nicht-reststoffbasierten, alumosilikatischen Bindemitteln, wie bspw. Metakaolin, keine thermische Vorbehandlung zur Herstellung des Ziegelmehls notwendig, so dass Energie eingespart wird.

In Ausführungsformen weist das Ziegelmehl 55 bis 65 Gew.-% $SiO_2$ und 8 bis 16 Gew.-% $Al_2O_3$ auf.

In bevorzugten Ausführungsformen liegt das Verhältnis von Wasser zum mindestens einen reststoffbasierten, alumosilikatischen Bindemittel im Bereich von 0,3 bis 0,4.

Vorteilhaft weist eine derartige Zusammensetzung gute Verarbeitungseigenschaften auf und ermöglicht eine ausreichende Porenbildung und Ausbildung einer homogenen Porenverteilung bei der für die Geopolymerbildung nötigen thermischen Aktivierung.

Dem Fachmann ist bekannt, dass der Wasseranteil in der erfindungsgemäßen reststoffbasierten Zusammensetzung aus dem reststoffbasierten, alkalischen, wässrigen Aktivator stammt. In Ausführungsformen weist der mindestens eine reststoffbasierte, alkalische, wässrige Aktivator einen Wassergehalt von 70 bis 90 Gew.-% auf.

In bevorzugten Ausführungsformen liegt das Verhältnis des mindestens einen reststoffbasierten Porosierungsmittels zum mindestens einen reststoffbasierten, alumosilikatischen Bindemittel im Bereich von 0,001 bis 0,02 liegt.

Vorteilhaft werden dadurch 50 bis 90 Vol.-% Poren während einer zur Geopolymerbildung nötigen thermischen Aktivierung ausgebildet.

Weiterhin zur Erfindung gehört die Verwendung einer erfindungsgemäßen reststoffbasierten Zusammensetzung zur Herstellung eines Geopolymer-Leichtsteins.

Vorteilhaft wird dadurch die Herstellung eines Geopolymer-Leichtsteins vollständig aus Reststoffen ermöglicht und damit Ressourcen geschont und Deponiemengen und -raum eingespart.

Ebenfalls zur Erfindung gehört die Verwendung einer erfindungsgemäßen, reststoffbasierten Zusammensetzung zur Herstellung eines Geopolymer-Leichtsteins.

Ebenfalls zur Erfindung gehört ein Verfahren zur Herstellung eines Geopolymer-Leichtsteins, umfassend die Schritte

 a) Bereitstellen einer erfindungsgemäßen reststoffbasierten Zusammensetzung,
 b) Mischen der reststoffbasierten Zusammensetzung,
 c) Formen der reststoffbasierten Zusammensetzung,
 d) Aktivieren der geformten, reststoffbasierten Zusammensetzung bei einer Temperatur im Bereich von 60°C bis 100°C für maximal 24 h.

Vorteilhaft wird dadurch die ressourcen- und/oder energieschonende Herstellung von Geopolymer-Leichtsteinen ermöglicht. Weiterhin vorteilhaft erfolgt die Herstellung der Geopolymer-Leichtsteine in einem Niedertemperaturprozess.

In Ausführungsformen erfolgt das Verfahren zur Herstellung eines Geopolymer-Leichtsteins in der Reihenfolge a), b), c) und d).

In Ausführungsformen wird in Schritt a) eine reststoffbasierte Zusammensetzung, enthaltend mindestens ein reststoffbasiertes, alumosilikatisches Bindemittel, ausgewählt aus Ziegelmehl, Braunkohleflugasche, Steinkohleflugasche, Rotschlamm, Klärschlamm oder einer Mischung der Vorgenannten, bereitgestellt.

In weiteren Ausführungsformen wird in Schritt a) eine reststoffbasierte Zusammensetzung, enthaltend mindestens einen reststoffbasierten, alkalischen Aktivator, Natriumaluminatlauge, bereitgestellt.

In weiteren Ausführungsformen wird in Schritt a) eine reststoffbasierte Zusammensetzung, enthaltend mindestens ein reststoffbasiertes Porosierungsmittel, ein siliziumbasiertes Pulver, bereitgestellt.

In weiteren Ausführungsformen wird in Schritt a) eine reststoffbasierte Zusammensetzung bereitgestellt, in der das Verhältnis des mindestens einen reststoffbasierten, alkalischen Aktivators zum mindestens einen reststoffbasierten, alumosilikatischen Bindemittel in der reststoffbasierten Zusammensetzung im Bereich von 0,35 bis 0,55 liegt.

In Ausführungsformen erfolgt das Mischen in Schritt b) in handelsüblichen Mischern derart, dass eine homogene Mischung erzielt wird. Dem Fachmann ist bekannt mit welchen Vorrichtungen und welchen Parametern er dies erreichen kann.

In Ausführungsformen erfolgt das Formen in Schritt c) mittels Gießen der reststoffbasierten Zusammensetzung in eine Form, in der die reststoffbasierte Zusammensetzung dem nachfolgenden Schritt d) unterzogen wird.

In Ausführungsformen erfolgt die Aktivierung in Schritt d) bei 60°C bis 80°C für maximal 24 h. In weiteren Ausführungsformen erfolgt das Aktivieren in Schritt d) unter Nutzung von Abwärme und/oder Abluft, bspw. Ofenabluft, Abwärme und/oder Abluft industrieller Prozesse.

In Ausführungsformen wird nach Schritt d) der hergestellte geopolymergebundene Leichtstein entformt. Entformen meint dabei, dass der hergestellte Leichtstein von einer Schritt c) genutzten Form befreit wird.

In bevorzugten Ausführungsformen erfolgt nach Schritt d) eine thermische Nachbehandlung bei einer Temperatur von 900°C bis 1200°C für 3 h bis 12 h.

Vorteilhaft erhöht sich dadurch die Druckfestigkeit des Geopolymer-Leichtsteins.

Die thermische Nachbehandlung kann vor oder nach dem Entformen des Geopolymer-Leichtsteins, bevorzugt nach dem Entformen, durchgeführt werden.

Während der thermischen Nachbehandlung findet üblicherweise ein Schrumpfen des Geopolymer-Leichtsteins statt. In Ausführungsformen beträgt die Schrumpfung 5 % bis 10 % des Volumens des Geopolymer-Leichtsteins.

Die thermische Nachbehandlung kann vorteilhaft direkt beim Einsatz des Geopolymer-Leichtsteins, bspw. beim Einsatz als feuerfeste Zustellung von Öfen oder Ofenwagen, erfolgen. Dadurch wird weiter Energie eingespart, da kein separater Prozessschritt zur thermischen Nachbehandlung durchgeführt werden muss.

Ebenfalls zur Erfindung gehört ein Geopolymer-Leichtstein, herstellbar aus einer erfindungsgemäßen reststoffbasierten Zusammensetzung. Erfindungsgemäß weist ein Geopolymer-Leichtstein eine Porosität im Bereich von 50 bis 90 Vol.-%, eine Druckfestigkeit nach 28 Tagen von mindestens 10 N/mm$^2$, ein Molverhältnis Si:Al im Bereich von 3 bis 4,5 und ein Molverhältnis Na:Al im Bereich von 0,5 bis 0,7 aufweist.

Vorteilhaft besteht ein derartiger Geopolymer-Leichtstein vollständig aus Reststoffen und ist damit ressourcen- und energieschonend. Weiterhin vorteilhaft kann ein derartiger Leichtstein nach dem Ende seiner Nutzungsdauer vollständig recycelt werden und erneut als Rohstoff zur Verfügung stehen. Weiterhin vorteilhaft ist ein derartiger Geopolymer-Leichtstein bei Temperaturen bis zu 1200°C einsetzbar.

Die Druckfestigkeit wird in Anlehnung an DIN EN 196-1 und DIN EN 12390-3 bestimmt.

In Ausführungsformen ist ein derartiger Geopolymer-Leichtstein bis zu einer Temperatur von 1200°C hitzebeständig, d.h. die angegebenen Festigkeiten des Geopolymer-Leichtsteins sind bis zu dieser Temperatur gewährleistet. Die Hitzebeständigkeit wird in Anlehnung an DIN 51730 und ISO 540 wurde mittels eines Erhitzungsmikroskop bestimmt.

In Ausführungsformen weist der Geopolymer-Leichtstein eine Dichte im Bereich von 400 bis 800 kg / m$^3$ auf. Vorteilhaft ist ein derartiger Leichtstein als Leichtbaustoff geeignet.

Die Berechnung der Gesamtporosität erfolgt nach folgender Gleichung:

$$p \ [\text{Vol.-\%}] = \frac{\rho_0 - \rho_R}{\rho_0} \cdot 100$$

mit p = Gesamtporosität [Vol.-%], $\rho_0$ = Reindichte [kg/dm$^3$] und $\rho_R$ = Rohdichte [kg/dm$^3$], wobei die Bestimmung der hierfür benötigten Dichten in Anlehnung an DIN EN 1936 erfolgt.

In weiteren Ausführungsformen weist der Geopolymer-Leichtstein eine Wärmeleitfähigkeit von 0,07 bis 0,2 W /mK auf. Vorteilhaft ist ein derartiger Leichtstein als Wärmedämmstoff geeignet.

Die Bestimmung der Wärmeleitfähigkeit wird nach dem Heißdraht- (Parallel-) Verfahren nach DIN EN 993-15 durchgeführt.

In weiteren Ausführungsformen weist der Geopolymer-Leichtstein ein Molverhältnis Si:Al von > 4 auf. Vorteilhaft ist ein derartiger Leichtbaustein bei Temperaturen > 1000°C einsetzbar.

Weiterhin zur Erfindung gehört die Verwendung eines erfindungsgemäßen Geopolymer-Leichtsteins im Ofenbau und/oder im Bauwesen.

Die erfindungsgemäßen Leichtbausteine sind aufgrund ihrer Eigenschaften im Bauwesen bspw. als Dämmmaterial oder Leichtbaustoff und/oder im Ofenbau als feuerfeste Zustellung für Öfen und/oder Ofenwagen einsetzbar.

In Ausführungsformen wird Natriumaluminatlauge als alkalischen Aktivator und/oder Si-Pulver als Porosierungsmittel in der Geopolymerbildung verwendet.

Vorteilhaft wird dadurch die Geopolymerbildung vollständig aus Reststoffen ermöglicht, so dass Ressourcen geschont werden und Deponiemengen und -räume eingespart werden können.

In Ausführungsformen werden Natriumaluminatlauge und/oder Si-Pulver zur Herstellung einer erfindungsgemäßen reststoffbasierten Zusammensetzung zur Herstellung eines Geopolymer-Leichtsteins und/oder zur Herstellung eines erfindungsgemäßen Geopolymer-Leichtsteins und/oder in einem erfindungsgemäßen Verfahren zur Herstellung eines Geopolymer-Leichtsteins verwendet.

Für die Realisierung der Erfindung ist es auch zweckmäßig, die vorbeschriebenen Ausführungsformen und Merkmale der Ansprüche zu kombinieren.

Nachfolgend soll die Erfindung anhand einiger Ausführungsbeispiele eingehender erläutert werden. Die Ausführungsbeispiele sollen dabei die Erfindung beschreiben ohne diese zu beschränken.

Ausführungsbeispiele

Beispiel 1: reststoffbasierte Zusammensetzung zur Herstellung von Geopolymer-Leichtsteinen

Eine reststoffbasierte Zusammensetzung zur Herstellung eines Geopolymer-Leichtsteins enthält Ziegelmehl als reststoffbasiertes, alumosilikatisches Bindemittel, Natriumaluminatlauge als reststoffbasierten, alkalischen Aktivator und Si-Pulver als reststoffbasiertes Porosierungsmittel. In der reststoffbasierten Zusammensetzung beträgt das Verhältnis der Natriumaluminatlauge zum Ziegelmehl 0,4, das Verhältnis des Si-Pulvers zum Ziegelmehl 0,01 und das Verhältnis von Wasser zum Ziegelmehl 0,35.

Das Ziegelmehl weist eine Korngröße im Bereich von 0 μm bis 63 μm und das Si-Pulver eine Korngröße < 63 μm auf. Die Natriumaluminatlauge weist eine Konzentration von 6 mol/l und einen Wassergehalt von 86 Gew.-% auf.

Beispiel 2: reststoffbasierte Zusammensetzung zur Herstellung von Geopolymer-Leichtsteinen

Eine reststoffbasierte Zusammensetzung zur Herstellung eines Geopolymer-Leichtsteins enthält Ziegelmehl als reststoffbasiertes, alumosilikatisches Bindemittel, Natriumaluminatlauge als reststoffbasierten, alkalischen Aktivator und Si-Pulver als reststoffbasiertes Porosierungsmittel. In der reststoffbasierten Zusammensetzung beträgt das Verhältnis der Natriumaluminatlauge zum Ziegelmehl 0,51, das Verhältnis des Si-Pulvers zum Ziegelmehl 0,01 und das Verhältnis von Wasser zum Ziegelmehl 0,44.

Das Ziegelmehl weist eine Korngröße im Bereich von 0 μm bis 63 μm und das Si-Pulver eine Korngröße < 63 μm auf. Die Natriumaluminatlauge weist eine Konzentration von 6 mol/l und einen Wassergehalt von 87 Gew.-% auf.

Beispiel 3: Verfahren zur Herstellung eines Geopolymer-Leichtsteins und Geopolymer-Leichtstein

Ein Geopolymer-Leichtstein wird hergestellt, indem eine reststoffbasierte Zusammensetzung entsprechend Bsp. 1 bereitgestellt wird. Anschließend wird die reststoffbasierte Zusammensetzung in einem handelsüblichen Mischaggregat homogen gemischt. Nachfolgend erfolgt das Formen der reststoffbasierten Zusammensetzung mitteln Gießen in eine geeignete Form. Die nachfolgende Aktivierung der reststoffbasierten Zusammensetzung wird bei einer Temperatur von 80°C für 24 h durchgeführt.

Der so hergestellte Geopolymer-Leichtstein weist eine Druckfestigkeit nach 28 Tagen von 23,2 N/mm$^2$ und eine Porosität von 69,6Vol.-%. Das Molverhältnis von Si:Al beträgt 4,32 und das Molverhältnis von Na:Al beträgt 0,52.

Beispiel 4: Verfahren zur Herstellung eines Geopolymer-Leichtsteins und Geopolymer-Leichtstein

Ein Geopolymer-Leichtstein wird hergestellt, indem eine reststoffbasierte Zusammensetzung entsprechend Bsp. 2 bereitgestellt wird. Die weitere Herstellung erfolgt analog Beispiel 3.

Der so hergestellte Geopolymer-Leichtstein weist eine Druckfestigkeit nach 28 Tagen von 10 N/mm$^2$ und eine Porosität von 72,7Vol.-% auf. Das Molverhältnis von Si:Al beträgt 4,16 und das Molverhältnis von Na:Al beträgt 0,61.

Beispiel 5: Verfahren zur Herstellung eines Geopolymer-Leichtsteins und Geopolymer-Leichtstein

Ein Geopolymer-Leichtstein wird entsprechend den Ausführungen in Beispiel 3 hergestellt. Nach der Aktivierung wird der Geopolymer-Leichtstein einer thermischen Nachbehandlung bei 1000°C für 4 h unterzogen. Ein derart hergestellter Geopolymer-Leichtstein weist eine Porosität von 61,2Vol.-% auf. Das Molverhältnis von Si:Al beträgt 4,32 und das Molverhältnis von Na:Al beträgt 0,52. Die Druckfestigkeit nach 28 Tagen ist mit 46,7 N/mm$^2$ deutlich erhöht gegenüber einem Geopolymer-Leichtstein, hergestellt ohne thermische Nachbehandlung.

**Zitierte Nicht-Patent-Literatur**

[Davidovitis et al]    J. Davidovits; "GEOPOLYMERS Inorganic polymeric new materials"; J. Therm. Anal. 1991, 37, 1633-1656)

[Zawrah et al]    M. F. Zawrah, R.A. Gadoa, N. Feltin, S. Ducourtieux, L. Devoille; "Recycling and utilization assessment of waste fired clay bricks (Grog) with granulated blast-furnace slag for geopolymer production"; Process safety and Environmental Protection 103 (2016) 237-251.

[Tuyan et al]    M. Tuyan, Ö. Andiç-Çakir, K. Ramyar; "Effect of alkali activator concentration. and curing condition on strength and microstructure of waste clay brick powder-based geopolymer"; Composites Part B 135 (2018) 242-252.

**Patentansprüche**

1.   Reststoffbasierte Zusammensetzung zur Herstellung von Geopolymer-Leichtsteinen, enthaltend

- mindestens ein reststoffbasiertes, alumosilikatisches Bindemittel,
- mindestens einen reststoffbasierten, alkalischen Aktivator, und
- mindestens ein reststoffbasiertes Porosierungsmittel,

wobei das Verhältnis des mindestens einen reststoffbasierten, alkalischen Aktivators zum mindestens einen reststoffbasierten, alumosilikatischen Bindemittel im Bereich von 0,2 bis 1,0 liegt, und das mindestens eine reststoffbasierte, alumosilikatische Bindemittel Ziegelmehl ist, und der mindestens eine reststoffbasierte, alkalische Aktivator eine wässrige, alkalische, Aluminium-enthaltende Lösung ist.

2.   Reststoffbasierte Zusammensetzung nach Anspruch 1, **dadurch gekennzeichnet, dass** das Verhältnis des mindestens einen reststoffbasierten, alkalischen Aktivators zum mindestens einen reststoffbasierten, alumosilikatischen Bindemittel im Bereich von 0,35 bis 0,55 liegt.

3. Reststoffbasierte Zusammensetzung nach Anspruch 1 oder 2, **dadurch gekennzeichnet, dass** das mindestens eine reststoffbasierte Porosierungsmittel ein siliziumbasiertes Pulver ist, wobei das siliziumbasierte Pulver ein Abfallprodukt der Silizium-produzierenden und/oder -verarbeitenden Industrie ist.

4. Reststoffbasierte Zusammensetzung nach einem der Ansprüche 1 bis 3, **dadurch gekennzeichnet, dass** der mindestens eine reststoffbasierte, alkalische Aktivator Natriumaluminatlauge ist.

5. Reststoffbasierte Zusammensetzung nach einem der Ansprüche 1 bis 4, **dadurch gekennzeichnet, dass** das Verhältnis von Wasser zum mindestens einen reststoffbasierten, alumosilikatischen Bindemittel im Bereich von 0,3 bis 0,4 liegt.

6. Reststoffbasierte Zusammensetzung nach einem der Ansprüche 1 bis 5, **dadurch gekennzeichnet, dass** das Verhältnis des mindestens einen reststoffbasierten Porosierungsmittels zum mindestens einen reststoffbasierten, alumosilikatischen Bindemittel im Bereich von 0,001 bis 0,02 liegt.

7. Verwendung einer reststoffbasierten Zusammensetzung nach einem der Ansprüche 1 bis 6 zur Herstellung eines Geopolymer-Leichtsteins.

8. Verfahren zur Herstellung eines Geopolymer-Leichtsteins, umfassend die Schritte

    a) Bereitstellen einer reststoffbasierten Zusammensetzung nach einem der Ansprüche 1 bis 6,
    b) homogenes Mischen der reststoffbasierten Zusammensetzung,
    c) Formen der reststoffbasierten Zusammensetzung,
    d) Aktivieren der geformten, reststoffbasierten Zusammensetzung bei einer Temperatur im Bereich von 60°C bis 100°C für maximal 24 h.

9. Verfahren nach Anspruch 8, **dadurch gekennzeichnet, dass** nach Schritt d) eine thermische Nachbehandlung bei einer Temperatur von 900°C bis 1200°C für 3 h bis 12 h erfolgt.

10. Geopolymer-Leichtstein, herstellbar aus einer reststoffbasierten Zusammensetzung nach einem der Ansprüche 1 bis 6, **dadurch gekennzeichnet, dass** der Geopolymer-Leichtstein eine Porosität im Bereich von 50 bis 90 Vol.-%, eine Druckfestigkeit nach 28 Tagen von mindestens 10 N/mm$^2$, ein Molverhältnis Si:Al im Bereich von 3 bis 4,5 und ein Molverhältnis Na:Al im Bereich von 0,5 bis 0,7 aufweist.

11. Verwendung eines Geopolymer-Leichtsteins nach Anspruch 10 im Ofenbau und/oder im Bauwesen.

12. Verwendung von Natriumaluminatlauge und/oder Si-Pulver zur Herstellung einer reststoffbasierten Zusammensetzung zur Herstellung eines Geopolymer-Leichtsteins nach einem der Ansprüche 1 bis 6 und/oder zur Herstellung eines Geopolymer-Leichtsteins nach Anspruch 10 und/oder in einem Verfahren zur Herstellung eines Geopolymer-Leichtsteins nach einem der Ansprüche 8 oder 9.

**Claims**

1. Residual material based composition for manufacturing lightweight geopolymer blocks, comprising

    - at least one residual material based aluminosilicate binding material,
    - at least one residual material based alkaline activator, and
    - at least one residual material based porosification agent,
    wherein the ratio of the at least one residual material based alkaline activator to the at least one residual material based aluminosilicate binding material is in the range from 0.2 to 1.0, and
    the at least one residual material based aluminosilicate binding material is brick dust, and the at least one residual material based alkaline activator is an aqueous, alkaline solution containing aluminum.

2. Residual material based composition according to claim 1, **characterized in that** the ratio of the at least one residual material based alkaline activator to the at least one residual material based aluminosilicate binding material is in the range from 0.35 to 0.55.

3. Residual material based composition according to claim 1 or 2, **characterized in that** the at least one residual material based porosification agent is a silicon based powder, wherein the silicon based powder is a waste product of the silicon producing and/or processing industry.

4. Residual material based composition according to any of the claims 1 to 3, **characterized in that** the at least one residual material based alkaline activator is a sodium aluminate lye.

5. Residual material based composition according to any of the claims 1 to 4, **characterized in that** the ratio of water to the at least one residual material based aluminosilicate binding material is in the range from 0.3 to 0.4.

6. Residual material based composition according to any of the claims 1 to 5, **characterized in that** the ratio of the at least one residual material based porosification agent to the at least one residual material based aluminosilicate binding material is in the range from 0.001 to 0.02.

7. Use of a residual material based composition according to any of the claims 1 to 6 for manufacturing a lightweight geopolymer block.

8. Method for manufacturing a lightweight geopolymer block, comprising the steps

   a) Providing a residual material based composition according to any of the claims 1 to 6,
   b) Homogenous mixing the residual material based composition,
   c) Shaping the residual material based composition,
   d) Activating the shaped residual material based composition at a temperature in the range from 60°C to 100°C for maximum 24 h.

9. Method according to claim 8, **characterized in that** after step d) a thermal treatment at a temperature in the range from 900°C to 1200°C for 3 h to 12 h is carried out.

10. Lightweight geopolymer block, manufacturable from a residual material based composition according to any of the claims 1 to 6, **characterized in that** the lightweight geopolymer block comprises a porosity in the range from 50 to 90 Vol.-%, a compressive strength after 28 day of minimum 10 N / mm$^2$, a mole ratio Si : Al in the range from 3 to 4.5 and a mole ratio Na : Al in the range from 0.5 to 0.7.

11. Use of a lightweight geopolymer block according to claim 10 in furnace construction and/or building industry.

12. Use of sodium aluminate lye and/or silicon powder for manufacturing a residual material based composition for manufacturing a lightweight geopolymer block according to any of the claims 1 to 6 and/or for manufacturing a lightweight geopolymer block according to claim 10 and/or in a method for manufacturing a lightweight geopolymer block according to claim 8 or 9.

**Revendications**

1. Composition à base de résidus destinée à la fabrication de pierres légères géopolymère, comprenant

   - au moins un liant aluminosilicaté à base de résidus,
   - au moins un activateur alcalin à base de résidus, et
   - au moins un agent porogène à base de résidus,

   le rapport entre ledit au moins un activateur alcalin à base de résidus et ledit au moins un liant aluminosilicaté à base de résidus se situant dans la plage de 0,2 à 1,0, et ledit au moins un liant aluminosilicaté à base de résidus étant de la poudre de brique, et ledit au moins un activateur alcalin à base de résidus étant une solution aqueuse alcaline contenant de l'aluminium.

2. Composition à base de résidus selon la revendication 1, **caractérisée en ce que** le rapport entre ledit au moins un activateur alcalin à base de résidus et ledit au moins un liant aluminosilicaté à base de résidus se situe dans la plage de 0,35 à 0,55

3. Composition à base de résidus selon la revendication 1 ou 2, **caractérisée en ce que** ledit au moins un agent porogène à base de résidus est une poudre à base de silicium, la poudre à base de silicium étant un déchet de l'industrie de production et/ou de transformation du silicium

4. Composition à base de résidus selon l'une des revendications 1 à 3, **caractérisée en ce que** ledit au moins un activateur alcalin à base de résidus est de la lessive d'aluminate de sodium.

5. Composition à base de résidus selon l'une des revendications 1 à 4, **caractérisée en ce que** le rapport entre l'eau et ledit au moins un liant aluminosilicaté à base de résidus se situe dans la plage de 0,3 à 0,4.

6. Composition à base de résidus selon l'une des revendications 1 à 5, **caractérisée en ce que** le rapport entre ledit au moins un agent porogène à base de résidus et ledit au moins un liant aluminosilicaté à base de résidus se situe dans la plage de 0,001 à 0,02.

7. Utilisation d'une composition à base de résidus selon l'une des revendications 1 à 6 pour la fabrication d'une pierre légère géopolymère.

8. Procédé de fabrication d'une pierre légère géopolymère, comprenant les étapes

   a) fournir une composition à base de résidus selon l'une des revendications 1 à 6,
   b) mélanger de manière homogène la composition à base de résidus,
   c) mettre en forme la composition à base de résidus,
   d) activer la composition à base de résidus moulée à une température dans la plage de 60 °C à 100 °C pendant 24 h au maximum.

9. Procédé selon la revendication 8, **caractérisé en ce qu'**après l'étape d), un post-traitement thermique est effectué à une température comprise entre 900 °C et 1 200 °C pendant 3 h à 12 h.

10. Pierre légère géopolymère, fabricable à partir d'une composition à base de résidus selon l'une des revendications 1 à 6, **caractérisée en ce que** la pierre légère géopolymère présente une porosité dans la plage de 50 à 90 % en volume, une résistance à la compression après 28 jours d'au moins 10 N/mm$^2$, un rapport molaire Si:Al dans la plage de 3 à 4,5 et un rapport molaire Na:Al dans la plage de 0,5 à 0,7.

11. Utilisation d'une pierre légère géopolymère selon la revendication 10 dans la construction de fours et/ou la construction des bâtiments.

12. Utilisation de lessive d'aluminate de sodium et/ou de poudre de Si pour la fabrication d'une composition à base de résidus destinée à la fabrication d'une pierre légère géopolymère selon l'une des revendications 1 à 6 et/ou à la fabrication d'une pierre légère géopolymère selon la revendication 10 et/ou dans un procédé de fabrication d'une pierre légère géopolymère selon l'une des revendications 8 ou 9.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2020120405 A1
- DE 10041834 A1
- EP 2462075 B1
- EP 1686105 B1
- WO 2008017109 A1
- DE 102017120789 A1
- WO 2019072993 A1
- KR 20200001255 A
- DE 102014003104 A1

**In der Beschreibung aufgeführte Nicht-Patentliteratur**

- **J. DAVIDOVITS**. GEOPOLYMERS Inorganic polymeric new materials. *J. Therm. Anal.*, 1991, vol. 37, 1633-1656
- **M. F. ZAWRAH** ; **R.A. GADOA** ; **N. FELTIN** ; **S. DUCOURTIEUX** ; **L. DEVOILLE**. Recycling and utilization assessment of waste fired clay bricks (Grog) with granulated blast-furnace slag for geopolymer production. *Process safety and Environmental Protection*, 2016, vol. 103, 237-251
- **M. TUYAN** ; **Ö. ANDIÇ-ÇAKIR** ; **K. RAMYAR**. Effect of alkali activator concentration. and curing condition on strength and microstructure of waste clay brick powder-based geopolymer. *Composites Part B*, 2018, vol. 135, 242-252